# EUROPÄISCHE PATENTSCHRIFT

(11) **EP 0 814 392 B1**
(45) Veröffentlichungstag und Bekanntmachung des Hinweises auf die Patenterteilung: **04.06.2008**
(21) Anmeldenummer: 97109329.9
(22) Anmeldetag: 09.06.1997
(51) Int. Cl.: G05B 19/042

(54) **Steuer- bzw. Regelvorrichtung, insbesondere für einen Elektroherd und einen Elektrobackofen**
Control or servocontrol, in particular for an electric hob and an electric oven
Dispositif de commande respectivement de régulation, en particulier pour une cuisinière électrique et un four électrique

(30) Priorität: 22.06.1996 DE 19625042
(43) Veröffentlichungstag der Anmeldung: 29.12.1997
(73) Patentinhaber: BSH Bosch und Siemens Hausgeräte GmbH, 81739 München (DE)
(72) Erfinder: Puchta, Ralf, Dipl.Ing. (FH), 93053 Regensburg (DE)

(56) Entgegenhaltungen:
- EP-A- 0 682 303
- EP-A- 0 716 361
- US-A- 4 158 432
- US-A- 4 417 151
- US-A- 4 470 113
- US-A- 5 444 644

## Beschreibung

Die Erfindung bezieht sich auf eine Steuer- bzw. Regelvorrichtung, insbesondere für einen Elektroherd und einen Elektrobackofen, gemäß Patentanspruch 1.

Zur elektronischen Steuerung in Haushaltsgroßgeräten, wie insbesondere bei Kombinationen von Elektroherden und Elektrobacköfen, sind zum gegenseitigen Informationsaustausch zwischen verschiedenen elektronischen Modulen eine Vielzahl von Schnittstellen mit entsprechenden Ein- bzw. Ausgängen, sogenannten "Ports", an den Modulen notwendig. Insbesondere werden flankensensitive Eingänge, Zähler-Eingänge sowie serielle synchrone und asynchrone Schnittstellen-Eingänge sowie Timercompare-Ausgänge, pulsweitenmodulierte Ausgänge sowie serielle synchrone und asynchrone Schnittstellen-Ausgänge benötigt.

Zur Bewältigung der zuvor geschilderten Schnittstellen-Kommunikationen bietet sich entweder die Verwendung hinsichtlich der Zahl von Ein- bzw. Ausgängen erheblich überdimensionierten Mikrocontroller oder von Mikrocontrollern mit speziellen Optionen an, die den Betrieb von seriellen, asynchronen Bussystemen erlauben, wobei dann die zu steuernde Peripherie entsprechend angepasste aufwendige Interface-Schaltungsfunktionen benötigt.

Aus Dokument EP 0 682 303 A1 ist ein Steuergerät offenbart, das insbesondere für ein Motorsteuerung dient. Dieses Steuergerät weist einen Mikrorechner auf, der mit Hilfe einer Umschaltung mit zwei seriellen Datenübertragungsleitungen abwechselnd verbindbar ist.

Der vorliegenden Erfindung liegt die Aufgabe zugrunde, eine Steuer- bzw. Regelvorrichtung für einen Elektroherd und einen Elekrtrobackofen zu verbessern.

Der elektronische Schaltungsaufwand für ein Master-Modul, insbesondere einen Mikrocontroller, kann trotz einer Vielzahl von Schnittstellen mit mehreren anzuschließenden, betriebsmäßig nur zeitweise zu aktivierenden Slave-Modulen erfindungsgemäß dadurch gemindert werden, daß lediglich ein Master-Modul mit gegenüber der Zahl der Aus- bzw. Eingänge der Slave-Module verringerter Zahl von Ein- bzw. Ausgängen vorgesehen und die nur zeitweise zu aktivierenden Slave-Module jeweils wechselweise zumindest während ihrer Aktivierung an jeweils gleiche Ein- bzw. Ausgänge des Master-Moduls angeschlossen sind.

Die Erfindung sowie weitere vorteilhafte Ausgestaltungen der Erfindung gemäß Merkmalen der Unteransprüche werden im folgenden anhand schematisch dargestellter Blockschaltbilder in der Zeichnung näher erläutert; darin zeigen:
- FIG 1: ein erstes Ausführungsbeispiel einer Kochstellen-bzw. Backofensteuerung;
- FIG 2: ein zweites Ausführungsbeispiel einer Kochstellen-bzw. Backofensteuerung.

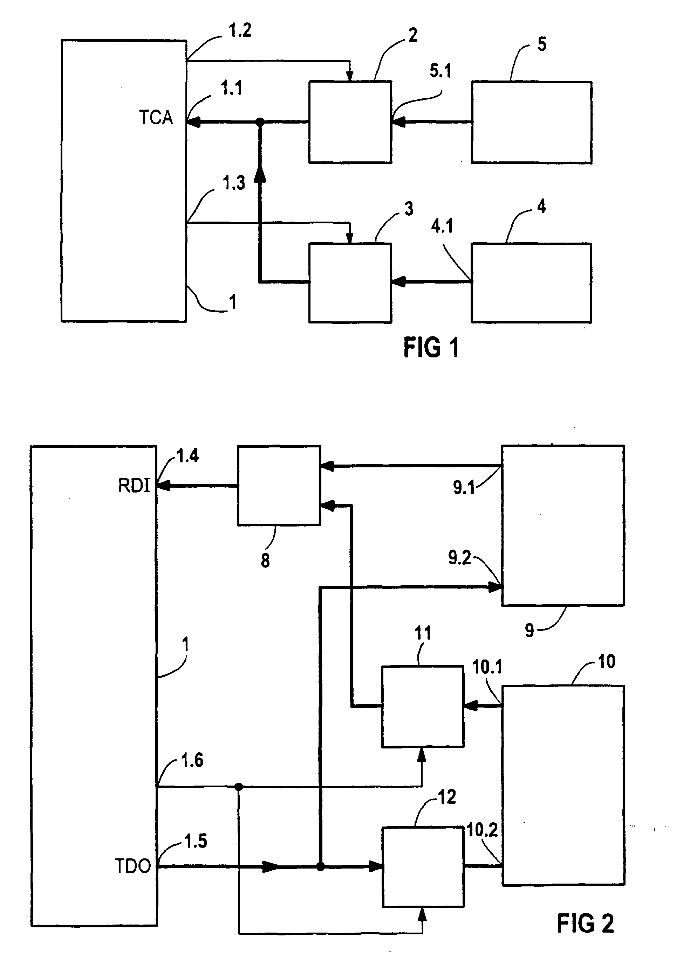

FIG 1 zeigt in einem Teilausschnitt ein erstes Ausführungsbeispiel einer Steuer- bzw. Regelvorrichtung für einen Elektroherd und einen Elektrobackofen mit zwei jeweils nur zeitweise zu aktivierenden Slave-Modulen 4 bzw.5, deren Ausgänge 4.1 bzw.5.1 im Sinne eines mit starker Strichkontur eingetragenen Datenflusses wechselweise an einen einzigen flankensensitiven Eingang 1.1 in Form eines TCA-Dateneinganges eines als Master-Modul vorgesehenen Mikrocontrollers 1 anschließbar sind. Als hier ausschnittsweise dargestellte Schnittstellenumschaltung kann z.B. als erste Quelle eines Datenflusses ein Slave-Modul 4 in Form einer Temperatur-Meßvorrichtung des Backofens und als zweites Slave-Modul 5 ein Betriebsartensteller mit entsprechend spezifischen Betriebsarten übermittelter spezifischer Pulscodierung vorgesehen sein.

Zur Anschaltung des Ausganges 4.1 des einen Slave-Moduls 4 bzw. des Ausganges 5.1 des anderen Slave-Moduls 5 an den gemeinsam genutzten Eingang 1.1 des Mikrocontrollers 1 dienen jeweils in den Datenflußleitungen ein EIN-/AUS-Schalter 2 bzw.3, die an Steuerausgänge 1.2 bzw.1.3 des Mikrocontrollers 1 angeschlossen sind und von diesem ansteuerbar sind. Anstelle der beiden getrennten EIN-/AUS-Schalter 2 bzw.3 kann auch ein gemeinsamer Umschalter vorgesehen sein.

FIG 2 zeigt wiederum im Ausschnitt einer Steuer- bzw. Regelvorrichtung für einen Elektroherd und einen Elektrobackofen einen Master-Modul in Form eines Mikrocontrollers 1 mit einem ersten gemeinsam genutzten Eingang 1.4 in Form eines RDI-Dateneinganges, an den zwei Slave-Module 9 bzw.10, z.B. in Form einer Zeitmeß- bzw. Zeitgabevorrichtung einerseits bzw. einer Diagnose-Einheit andererseits in schaltungstechnisch besonders einfacher Weise über einen ODER-Verknüpfungsschalter 8 parallel anliegen, wobei der Ausgang 9.1 des einen Slave-Moduls 9 direkt und dauernd an den ODER-Verknüpfungsschalter 8 angeschlossen und der Ausgang 10.1 des weiteren Slave-Moduls 10 über einen EIN-/AUS-Schalter 11 an den ODER-Verknüpfungsschalter 8 anschließbar ist.

In erfindungsgemäß vorgesehener Doppelausnutzung ist als weitere Schnittstelle ein Ausgang 1.5 in Form eines TDO-Datenausganges des Mikrocontrollers 1 sowohl an einen Eingang 9.2 des einen Slave-Moduls 9 als auch an einen Eingang 10.2 des anderen Slave-Moduls 10 anschließbar. Über diesen Datenfluß können z.B. von dem einen Slave-Modul 9 Zeitabfragen angefordert werden und über den Eingang 10.2 des zweiten Slave-Moduls 10 Service-Rückmeldungen an die als zweiter Slave-Modul 10 vorgesehene Diagnose-Einheit zurückgesendet werden.

In schaltungstechnisch besonders aufwandsarmer Weise liegt die eine der beiden Datenleitungen, in vorliegendem Fall der Datenfluß zum Eingang 9.2 des Slave-Moduls 9 dauernd und direkt verbunden an dem Ausgang 1.5 des Mikrocontrollers 1 und ist die zweite Datenflußverbindung zwischen dem Ausgang 1.5 des Mikrocontrollers 1 einerseits und dem Eingang 10.2 des zweiten Slave-Moduls 10 über einen EIN-/AUS-Schalter 12 anschließbar.

Die Ansteuerung der EIN-/AUS-Schalter 11 bzw.12 erfolgt wiederum durch den Master-Modul 1 durch eine entsprechende Steuerverbindung mit an einem Steuerausgang 1.6 des Mikrocontrollers 1.

In vorteilhafter Weise sind die EIN-/AUS-Schalter bzw. Umschalter in Form von Halbleiter-Schaltern, insbesondere in Form von Analog-Halbleiterschaltern einer Standardlogikfamilie, ausgebildet.

## Patentansprüche

1. Steuer- bzw. Regelvorrichtung, insbesondere für einen Elektroherd und einen Elektrobackofen, mit einem Master-Modul (1) mit Ein- bzw. Ausgängen (1.1;1.4 bzw.1.5) zur Verbindung mit Aus- bzw. Eingängen (4.1;5.1;9.1;10.1 bzw.9.2;10.2) von nur jeweils zeitweise zu aktivierenden Slave-Modulen (4;5 bzw.9;10), wobei lediglich ein Master-Modul (1) mit gegenüber der Zahl der Aus- bzw. Eingänge der Slave-Module (4;5 bzw. 10 9;10) verringerter Zahl von Ein- bzw. Ausgängen vorgesehen und Slave-Module (4;5 bzw.9;10) jeweils wechselweise zumindest während ihrer Aktivierung an jeweils gleiche Ein- bzw. Ausgänge des Master-Moduls (1) angeschlossen sind, wobei die Steuer- bzw. Regelvorrichtung versehen ist mit einem Anschluss der Ausgänge (9.1 bzw.10.1) von zwei Slave-Modulen (9 bzw. 10) an einen gemeinsamen Eingang (1.4) des Master-Moduls (1) über einen gemeinsamen ODER-Verknüpfungsschalter (8), **dadurch gekenntzeichnet,** dass der Ausgang (9.1) des einen Slave-Moduls (9) direkt und der Ausgang (10.1) des anderen Slave-Moduls (10) über einen, von dem Master-Modul (1) ansteuerbaren, EIN-/AUS- Schalter (11) bzw. einen gemeinsamen Umschalter an den gemeinsamen ODER-Verknüpfungsschalter (8) anschließbar sind.

2. Steuer- bzw. Regelvorrichtung nach dem vorhergehenden Anspruch mit einem Master-Modul in Form eines Mikrocontrollers (1).

3. Steuer- bzw. Regelvorrichtung nach zumindest einem der vorhergehenden Ansprüche mit einem Slave-Modul in Form einer Diagnose-Einheit (10).

4. Steuer- bzw. Regelvorrichtung nach zumindest einem der vorhergehenden Ansprüche mit einem Slave-Modul in Form einer Temperatur-Messvorrichtung (4).

5. Steuer- bzw. Regelvorrichtung nach zumindest einem der vorhergehenden Ansprüche mit einem Slave-Modul in Form eines Betriebsarten-Stellers (5).

6. Steuer- bzw. Regelvorrichtung nach zumindest einem der vorhergehenden Ansprüche mit einem Slave-Modul in Form einer Zeitmess- bzw. Zeitgabevorrichtung (9).

7. Steuer- bzw. Regelvorrichtung nach zumindest einem der vorhergehenden Ansprüche mit einem Anschluss eines Ausgangs (1.5) des Master-Moduls (1) an jeweils einen Eingang (9.2 bzw. 10.2) je eines Slave-Moduls (9 bzw. 10), wobei insbesondere der eine Ausgang (1.5) des Master-Moduls (1) mit dem einen Eingang (9.2) des einen Slave-Moduls (10) direkt und mit dem Eingang (10.2) des anderen Slave-Moduls (10) über einen, insbesondere von dem Master-Modul (1) ansteuerbaren, EIN-/AUS-Schalter (12) bzw. einen gemeinsamen Umschalter anschließbar ist.

8. Steuer- bzw. Regelvorrichtung nach zumindest einem der vorhergehenden Ansprüche mit EIN-/AUS-Schaltern (2;3;11;12) bzw. Umschaltern in Form von Halbleiter-Schaltern, insbesondere Analog-Halbleiterschaltern einer Standardlogikfamilie.

9. Elektroherd und Elektrobackofen mit einer Steuer- bzw. Regelvorrichtung nach einem der Ansprüche 1 bis 8.

## Claims

1. Control or regulating device, particularly for an electric oven and an electrical baking oven, comprising a master module (1) with inputs and outputs (1.1; 1.4 and 1.5) for connection with outputs and inputs (4.1; 5.1; 9.1; 10.1 and 9.2; 10.2) of slave modules (4; 5 and 9; 10) to be respectively activated only at times, wherein merely one master module (1) with a reduced number of inputs and outputs by comparison with the number of outputs and inputs of the slave modules (4; 5 and 9; 10) is provided and slave modules (4; 5 and 9; 10) at least during the activation thereof are respectively connected alternately to the same inputs and outputs of the master module (1), wherein the control or regulating device is provided with a connection of the outputs (9.1 and 10.1) of two slave modules (9 and 10) with a common input (1.4) of the master module (1) by way of a common OR logic switch (8), **characterised in that** the output (9.1) of one slave module (9) is connected with the common OR logic switch (8) directly and the output (10.1) of the other slave module (10) is connected with the common OR logic switch (8) by way of an ON/OFF switch (11), which is controllable by the master module (1), or by way of a common changeover switch.

2. Control or regulating device according to the preceding claim, with a master module in the form of a microcontroller (1).

3. Control or regulating device according to at least one of the preceding claims, with a slave module in the form of a diagnostic unit (10).

4. Control or regulating device according to at least one of the preceding claims, with a slave module in the form of a temperature measuring device (4).

5. Control or regulating device according to at least one of the preceding claims, with a slave module in the form of an operating mode setter (5).

6. Control or regulating device according to at least one of the preceding claims, with a slave module in the form of a time measuring or time providing device (9).

7. Control or regulating device according to at least one of the preceding claims, with a connection of an output (1.5) of the master module (1) with a respective input (9.2 and 10.2) of each slave module (9 and 10), wherein in particular the output (1.5) of the master module (1) is connectible with the input (9.2) of one slave module (10) directly and with the input (10.2) of the other slave module (10) by way of an ON/OFF switch (12), which is controllable by, in particular, the master module (1), or a common changeover switch.

8. Control or regulating device according to at least one of the preceding claims, with ON/OFF switches (2; 3; 11; 12) or changeover switches in the form of semiconductor switches, in particular analog semiconductor switches of a standard logic family.

9. Electric oven and electric baking oven with a control or regulating device according to any one of claims 1 to 8.

## Revendications

1. Dispositif de commande respectivement de régulation, notamment pour une cuisinière électrique et un four de cuisson électrique, comprenant un module maître (1) dotés d'entrées resp. de sorties (1.1 ; 1.4 resp. 1.5) pour la connexion avec des sorties resp. des entrées (4.1 ; 5.1 ; 9.1 ; 10.1 resp. 9.2 ; 10.2) de modules esclaves (4.5 resp. 9 ; 10) à activer respectivement seulement de manière périodique, seulement un module maître (1) ayant un nombre moindre d'entrées resp. de sorties par rapport au nombre de sorties resp. d'entrées des modules esclaves (4 ; 5 resp. 10.9 ; 10) étant prévu et des modules esclaves (4 ; 5 resp. 9 ; 10) étant respectivement raccordés en alternance à des entrées resp. à des sorties identiques du module maître (1) au moins pendant leur activation, le dispositif de commande resp. de régulation étant muni d'un raccordement des sorties (9.1 resp. 10.1) de deux modules esclaves (9 resp. 10) à une entrée commune (1.4) du module maître (1) par l'intermédiaire d'un commutateur de circuit OU (8), **caractérisé en ce que** la sortie (9.1) de l'un des modules esclaves (9) est raccordable directement au commutateur de circuit OU commun (8) et **en ce que** la sortie (10.1) de l'autre module esclave (10) est raccordable au commutateur de circuit OU commun (8) par l'intermédiaire d'un commutateur de MARCHE/ARRET (11) commandable par le module maître (1), resp. par l'intermédiaire d'un commutateur commun.

2. Dispositif de commande resp. de régulation selon la revendication précédente, comprenant un module maître sous forme d'un microcontrôleur (1).

3. Dispositif de commande resp. de régulation selon au moins une quelconque des revendications précédentes, comprenant un module esclave sous forme d'une unité de diagnostic (10).

4. Dispositif de commande resp. de régulation selon au moins une quelconque des revendications précédentes, comprenant un module esclave sous forme d'un dispositif de mesure de température (4).

5. Dispositif de commande resp. de régulation selon au moins une quelconque des revendications précédentes, comprenant un module esclave sous forme d'un actionneur de modes opératoires (5).

6. Dispositif de commande resp. de régulation selon au moins une quelconque des revendications précédentes, comprenant un module esclave sous forme d'un dispositif de mesure de temps resp. d'indication de temps (9).

7. Dispositif de commande resp. de régulation selon au moins une quelconque des revendications précédentes, comprenant un raccordement d'une sortie (1.5) du module maître (1) à respectivement une entrée (9.2 resp. 10.2) de chacun des modules esclaves (9 resp. 10), notamment l'une des sorties (1.5) du module maître (1) étant raccordable directement à l'une des entrées (9.2) de l'un des modules esclaves (10) et à l'entrée (10.2) de l'autre module esclave (10) par l'intermédiaire d'un commutateur de MARCHE/ARRET (12) commandable notamment par le module maître (1), resp. par l'intermédiaire d'un commutateur commun.

8. Dispositif de commande resp. de régulation selon au moins une quelconque des revendications précédentes, comprenant des commutateurs de MARCHE/ARRET (2 ; 3 ; 11 ; 12) resp. des commutateurs sous forme de commutateurs à semi-conducteurs, notamment des commutateurs à semi-conducteurs analogiques d'une famille de logique standard.

9. Cuisinière électrique et four de cuisson électrique comprenant un dispositif de commande resp. de régulation selon l'une quelconque des revendications 1 à 8.
